# EUROPÄISCHE PATENTSCHRIFT

(11) **EP 3 691 934 B1**
(45) Veröffentlichungstag und Bekanntmachung des Hinweises auf die Patenterteilung: **06.01.2021**
(21) Anmeldenummer: 18799465.2
(22) Anmeldetag: 29.10.2018
(51) Int. Cl.: B60R 1/00

(54) **RÜCKSPIEGELANORDNUNG**
REAR VIEW MIRROR ASSEMBLY
ASSEMBLAGE DE RÉTROVISEUR

(30) Priorität: 16.02.2018 DE 102018202387
(43) Veröffentlichungstag der Anmeldung: 12.08.2020
(73) Patentinhaber: Audi AG, 85045 Ingolstadt (DE)
(72) Erfinder: BROGHAMMER, Florian, 85055 Ingolstadt (DE); HORNISCHER, Jörg, 85139 Wettstetten (DE)
(86) Internationale Anmeldenummer: PCT/EP2018/079594
(87) Internationale Veröffentlichungsnummer: WO 2019/158233

(56) Entgegenhaltungen:
- EP-A2- 1 022 191
- EP-A2- 2 025 556
- JP-A- H05 294 183

## Beschreibung

Die Erfindung betrifft eine Rückspiegelanordnung für ein Kraftfahrzeug, umfassend wenigstens eine Bildaufnahmeeinrichtung, umfassend ein Gehäuse und eine im Gehäuse aufgenommene Kamera, wobei das Gehäuse wenigstens eine Scheibe aufweist, und eine Anzeigeeinrichtung zur Anzeige eines Kamerabilds.

Viele Fahrzeuge weisen klassische Rückspiegel auf, die üblicherweise au-βenseitig an der Fahrzeugkarosserie, insbesondere im vorderen Bereich der fahrer- und beifahrerseitigen Fahrzeugtür auf etwa halber Fahrzeughöhe, angeordnet sind. Dadurch wird für einen Fahrer ein Spiegelbild des Bereichs hinter dem Fahrzeug im Spiegel sichtbar. Klassische Spiegelsysteme umfassen üblicherweise Permanentspiegel, die aus einer mit beispielsweise Aluminium beschichteten Glasplatte bestehen.

Heutzutage werden statt klassischen Rückspiegeln immer öfter virtuelle Rückspiegel verwendet. Bei diesen hinlänglich bekannten virtuellen Rückspiegeln sind die Permanentspiegel durch Bildaufnahmeeinrichtungen ersetzt, die jeweils ein Gehäuse und eine sich darin befindliche Kamera umfassen. Die Kamera erfasst den durch den virtuellen Rückspiegel zweckmä-βigerweise einzusehende Bereich der Umgebung hinter dem Kraftfahrzeug durch eine transparente Scheibe des Gehäuses hindurch. Diese Aufnahmen werden dem Fahrer über eine fahrzeuginnenseitig angeordnete Anzeigeeinrichtung, insbesondere ein Display, angezeigt. Im Gegensatz zum klassischen Rückspiegel sieht der Fahrer mithin die durch den virtuellen Rückspiegel erfasste Umgebung nicht mehr direkt im außenseitigen Spiegel, sondern stattdessen in der Anzeigeeinrichtung Die Druckschrift EP 1 022 191 A2 offenbart eine Rückspiegelanordnung mit den Merkmalen des Oberbegriffs des Anspruchs 1.

Erfahrungsgemäß fällt es vielen Fahrern schwer, neue und mithin ungewohnte Technologien zu nutzen. Aufgrund der Sorge, möglicherweise überfordert zu sein, ziehen viele Fahrer altbewährte und vor allem gewohnte Systeme neuen und innovativen Technologien vor. Insbesondere virtuellen Rückspiegeln gegenüber sind Fahrer oft skeptisch eingestellt und bevorzugen oft klassische Rückspiegel.

Der Erfindung liegt die Aufgabe zugrunde, eine demgegenüber verbesserte Rückspiegelanordnung anzugeben.

Zur Lösung dieser Aufgabe ist erfindungsgemäß vorgesehen, dass die Rückspiegelanordnung der eingangs genannten Art in einem Kameramodus, in dem die in ihrer Transparenz und ihrem Spiegelverhalten änderbare Scheibe transparent, und einem Spiegelmodus, in dem die Scheibe verspiegelt ist, betreibbar ist, wobei im Kameramodus die Kamera die Umgebung des Kraftfahrzeugs durch die transparente Scheibe hindurch erfasst, die über die Anzeigeeinrichtung einem Fahrer angezeigt wird, wobei im Spiegelmodus ein Spiegelbild der Umgebung in der spiegelnden Scheibe für den Fahrer sichtbar ist.

Daraus ergibt sich vorteilhaft die Möglichkeit, dass die Rückspiegelanordnung im Kameramodus oder dem Spiegelmodus betreibbar ist. Mithin kann der vom Fahrer gewünschte Modus ohne großen Aufwand bedarfsgemäß eingestellt werden. Diese Einstellung kann, wie weiter unten beschrieben, beispielsweise vom Fahrer selbst oder von einer Fachwerkstatt vorgenommen werden.

Analog zu einem klassischen Rückspiegel kann die Bildaufnahmeeinrichtung im vorderen Bereich der fahrer- oder beifahrerseitigen Fahrzeugtür, zum Beispiel auf halber Fahrzeughöhe, angeordnet sein. Das Gehäuse weist an der Seite, die zweckmäßigerweise dem sich hinter dem Fahrzeug befindlichen Bereichs zugewandt ist, eine Scheibe auf. Die Kamera ist dazu eingerichtet, durch die Scheibe hindurch diese Umgebung zu erfassen und an die Anzeigeeinrichtung zu übertragen, wobei die Anzeigeeinrichtung die Aufnahmen dem Fahrer anzeigt.

Die Scheibe ist dazu eingerichtet, ihre Transparenz beziehungsweise Lichtdurchlässigkeit sowie ihr Spiegelverhalten beziehungsweise Spiegelvermögen zu ändern. Die Scheibe kann einen verspiegelten und einen transparenten Zustand einnehmen. Im verspiegelten Zustand wird auf die Scheibe einfallendes Licht möglichst vollständig gespiegelt beziehungsweise reflektiert. Die Transparenz der Scheibe ist im verspiegelten Zustand mithin möglichst gering. Hingegen weist die Scheibe im transparenten Zustand die größtmögliche Lichtdurchlässigkeit und das kleinstmögliche beziehungsweise kein Spiegelverhalten auf. Auf die Scheibe einfallendes Licht durchdringt diese im transparenten Zustand, abgesehen von durch Lichtbrechung verursachte Effekte, möglichst ungestört.

Befindet sich die Rückspiegelanordnung im Kameramodus, dann arbeitet sie nach dem bereits erläuterten Prinzip eines virtuellen Rückspiegels. In diesem Modus befindet sich die Scheibe in einem transparenten Zustand, wodurch die Umgebung für die Kamera erfassbar ist. Die dann von der Kamera erfassten Aufnahmen werden in Echtzeit, das heißt mit einer möglichst geringen Zeitverzögerung, dem Fahrer durch die Anzeigeeinrichtung angezeigt.

Befindet sich die Rückspiegelanordnung im Spiegelmodus, dann arbeitet sie nach dem Prinzip eines klassischen Rückspiegels. In diesem Modus befindet sich die Scheibe im spiegelnden Zustand. Das auf die Scheibe einfallende Licht wird in Richtung des Fahrers reflektiert, für den dadurch ein Spiegelbild der rückwärtigen Umgebung in der Scheibe sichtbar wird.

Die Anzeigeeinrichtung einer erfindungsgemäßen Rückspiegelanordnung kann ein Display umfassen, das neben der Anzeige des Kamerabildes dazu eingerichtet ist, beispielsweise Informationen eines Navigationssystems und/oder der Geschwindigkeit und/oder der aktuellen Temperatur und/oder dergleichen auszugeben. Die Anzeigeeinrichtung kann insbesondere auch ein Teil eines Infotainment-Systems sein.

Alternativ oder zusätzlich kann die Anzeigeeinrichtung einen Projektor zur Projektion eines Bildes auf eine zugeordnete Projektionsfläche umfassen. In diesem Fall kann die Anzeigeeinrichtung als ein Head-up-Display ausgebildet sein, wobei das Kamerabild auf die Windschutzscheibe des Kraftfahrzeugs oder eine andere geeignete Fläche projiziert werden kann. Für den Fall, dass die Anzeigeeinrichtung ein Display und einen Projektor umfasst ist denkbar, dass der Fahrer auswählen kann, welches dieser beiden Geräte er nutzen möchte.

Für eine erfindungsgemäße Rückspiegelanordnung kann vorgesehen sein, dass bei Vorliegen einer Fehlfunktion der Kamera und/oder der Anzeigeeinrichtung die Rückspiegelanordnung in den Spiegelmodus geändert wird oder in diesem bleibt. Im Falle eines Ausfalls einer der Komponenten, die für einen Betrieb der Rückspiegelanordnung im Kameramodus benötigt werden, kann möglicherweise dem Fahrer die Umgebung über die Anzeigeeinrichtung nicht mehr angezeigt werden. Im Gegensatz zu einem virtuellen Rückspiegel kann eine erfindungsgemäße Rückspiegelanordnung derart ausgebildet sein, dass in diesem Fall der Betriebsmodus automatisch in den Spiegelmodus geändert wird und dadurch die grundlegende Funktionalität der Rückspiegelanordnung, nämlich dass der Fahrer die Umgebung insbesondere hinter dem Fahrzeug nicht aus seinem Blick verliert, erhalten bleibt. Er ist mithin im Falle einer Fehlfunktion der Rückspiegelanordnung nicht unbedingt gezwungen, unmittelbar eine Fachwerkstatt aufzusuchen, sondern kann die Rückspiegelanordnung im Spiegelmodus weiterhin nutzen. Gegebenenfalls kann für eine erfindungsgemäße Rückspiegelanordnung vorgesehen sein, dass der Fahrer über die Anzeigeeinrichtung oder über ein optisches und/oder akustisches Warnsignal über die Fehlfunktion informiert wird.

Für die erfindungsgemäße Rückspiegelanordnung kann vorgesehen sein, dass die Scheibe mit einer Steuereinrichtung verbunden ist, wobei die Steuereinrichtung zum Wechseln der Scheibe vom transparenten Zustand in den gespiegelten Zustand und umgekehrt ausgebildet ist. So kann die Einstellung des Betriebsmodus der Rückspiegelanordnung wie weiter unten beschrieben über die Steuereinrichtung beispielsweise bereits werkseitig oder durch den Fahrer beziehungsweise eine Fachwerkstatt oder dergleichen erfolgen.

Eine diesbezügliche Weiterbildung der erfindungsgemäßen Rückspiegelanordnung kann darin bestehen, dass die Steuereinrichtung dazu eingerichtet ist, die Fehlfunktion der Kamera und oder der Anzeigeeinrichtung zu erfassen und bei Vorliegen der Fehlfunktion die Rückspiegelanordnung in den Spiegelmodus zu ändern oder in diesem zu lassen. Beispielsweise überprüft die Steuereinrichtung die Funktionalität beteiligter Bauteile in regelmäßigen und möglichst kurzen Zeitabständen. So kann die Steuerungseinrichtung bei einem Ausfall einer Komponente der Rückspiegelanordnung im Kameramodus diese möglichst schnell und automatisch, das heißt ohne eine Aktion des Fahrers, in den Spiegelmodus bringen. Befindet sich die Rückspiegelanordnung bereits im Spiegelmodus, so belässt die Steuereinrichtung bei Erfassung einer Fehlfunktion die Rückspiegelanordnung im Spiegelmodus.

Für die erfindungsgemäße Rückspiegelanordnung kann die Steuereinrichtung dazu eingerichtet sein, bei Vorliegen einer nutzerseitigen Bedieneingabe die Rückspiegelanordnung vom Kameramodus in den Spiegelmodus zu ändern und umgekehrt. Zu diesem Zweck kann vorgesehen sein, dass zur Bedieneingabe eine Taste oder ein Touchscreen und/oder ein Sensor zur Erfassung eines Sprachbefehls oder einer Bedienbewegung des Fahrers vorgesehen ist. Dadurch wird es dem Fahrer ermöglicht, selbstständig die Rückspiegelanordnung vom Spiegelmodus in den Kameramodus umzuschalten und umgekehrt. So kann etwa ein Fahrer, der zunächst statt der virtuellen Rückspiegelanordnung die klassische Variante gewählt hat, den Modus der Rückspiegelanordnung auf persönlichen Wunsch noch ändern. Zudem können beispielsweise Fahrer, die Anzeigeeinrichtungen wie Displays während Nachtfahrten nicht gerne nutzen, die Rückspiegelanordnung nachts in den Spiegelmodus schalten.

Die Steuereinrichtung kann dazu eingerichtet sein, wenigstens eine durch den Fahrer vorgenommene Sitzeinstellungen, insbesondere die Sitzposition, zu erfassen und die Rückspiegelanordnung in einen dieser Information zugeordneten Modus umzuschalten oder in diesem zu lassen. Dadurch wird ermöglicht, dass mehrere Fahrer, die das Fahrzeug nutzen, vorab ihren bevorzugten Modus der Rückspiegelanordnung festlegen können. Durch die Identifikation der für den jeweiligen Fahrer typischen Sitzeinstellung durch die Steuereinrichtung kann dann der dem jeweiligen Fahrer zugeordnete Modus der Rückspiegelanordnung automatisch eingestellt werden.

Die Scheibe der erfindungsgemäßen Rückspiegelanordnung kann wenigstens eine Trägerscheibe umfassen, wobei die Trägerscheibe einen Film aufweist, der in Abhängigkeit des Modus der Rückspiegelanordnung in den transparenten und den spiegelnden Zustand gebracht werden kann. Die Transparenz und das Spiegelverhalten der änderbaren Scheibe hängt mithin im Wesentlichen von dem Zustand des Films ab, der typischerweise eine Dicke im Nanometerbereich aufweist. Der Schaltvorgang des Films bezüglich des transparenten und spiegelnden Zustands kann, wie im Folgenden noch genauer beschrieben wird, über das Anlegen einer elektrischen Spannung an die Scheibe erfolgen. Zu diesem Zweck kann die Scheibe mit der Steuereinrichtung verbunden sein, die die elektrische Spannung steuert.

Der Film kann aus einer Magnesium-Titan-Legierung bestehen, die in Abhängigkeit einer Wasserstoff- und/oder Sauerstoffkonzentration einer mit dem Film in Kontakt stehenden Atmosphäre den transparenten oder spiegelnden Zustand einnimmt. Zu diesem Zweck kann die Scheibe eine Trägerscheibe, eine weitere Scheibe, den Film, eine Atmosphäre sowie ein Sauerstoff- und/oder Wasserstoffreservoir umfassen. Die Trägerscheibe und die weitere Scheibe können im Wesentlichen parallel zueinander angeordnet sein, wobei zwischen den Scheiben ein Freiraum zur Aufnahme der Atmosphäre sowie des Reservoirs vorgesehen ist. Durch Anlegen der elektrischen Spannung an das Reservoir kann eine Emission und/oder Absorption des Sauerstoffs und/oder Wasserstoffs aus dem Reservoir initiiert werden. Die Dauer dieses Vorgangs legt fest, wie lange die Rückspiegelanordnung benötigt, um von dem einen in den jeweils anderen Betriebsmodus umzuschalten.

Die Scheibe der erfindungsgemäßen Rückspiegelanordnung kann eine zumindest abschnittsweise gewölbte Oberfläche aufweisen. Dadurch kann erreicht werden, dass der für den Fahrer einzusehende Bereich der Umgebung erweitert wird, insbesondere wenn sich die Rückspiegelanordnung im Spiegelmodus befindet.

Zudem kann eine Rückspiegelanordnung zwei oder mehrere Bildaufnahmeeinrichtungen umfassen, wobei eine erste Bildaufnahmeeinrichtung die Funktion des linken Außenspiegels, eine zweite Bildaufnahmeeinrichtung die Funktion des rechten Außenspiegels und eine dritte Bildaufnahmeeinrichtung die Funktion eines Innenspiegels einer klassischen Rückspiegelanordnung übernimmt. Sämtliche Bildaufnahmeeinrichtungen können vom Fahrer über die Steuereinrichtung gemeinsam und/oder individuell angesteuert werden.

Zudem betrifft die Erfindung ein Kraftfahrzeug umfassend wenigstens eine Rückspiegelanordnung der beschriebenen Art.

Für ein erfindungsgemäßes Kraftfahrzeug kann vorgesehen sein, dass die Anzeigeeinrichtung ein Display umfasst, wobei das Display an der dem Fahrzeuginnenraum zugewandten Seite einer fahrerseitigen Fahrzeugtür oder an einem Armaturenbrett angeordnet ist. Dies bewirkt vorteilhaft, dass der Fahrer die durch die Anzeigeeinrichtung angezeigte Umgebung während der Fahrt stets in seinem Blickfeld hat.

Für ein erfindungsgemäßes Kraftfahrzeug kann alternativ oder zusätzlich vorgesehen sein, dass die Anzeigeeinrichtung einen Projektor zur Projektion eines Bildes auf eine zugeordnete Projektionsfläche umfasst. Die zugeordnete Projektionsfläche kann beispielsweise die Windschutzscheibe des Kraftfahrzeugs sein. In diesem Fall ist die Anzeigeeinrichtung als ein Head-up-Display ausgebildet, wobei dem Fahrer die Umgebung beziehungsweise das Kamerabild sowie beispielsweise die aktuelle Geschwindigkeit, die Fahrtroute oder Ähnliches auf der Windschutzscheibe beziehungsweise Frontscheibe angezeigt werden kann.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine schematische Aufsicht auf den vorderen Bereich eines Kraftfahrzeugs umfassend eine erfindungsgemäße Rückspiegelanordnung,
- Fig. 2: eine detaillierte Ansicht eines Ausschnitts des Kraftfahrzeugs aus Fig. 1, und
- Fig. 3: eine Schnittansicht entlang der Linie III - III aus Fig. 2.

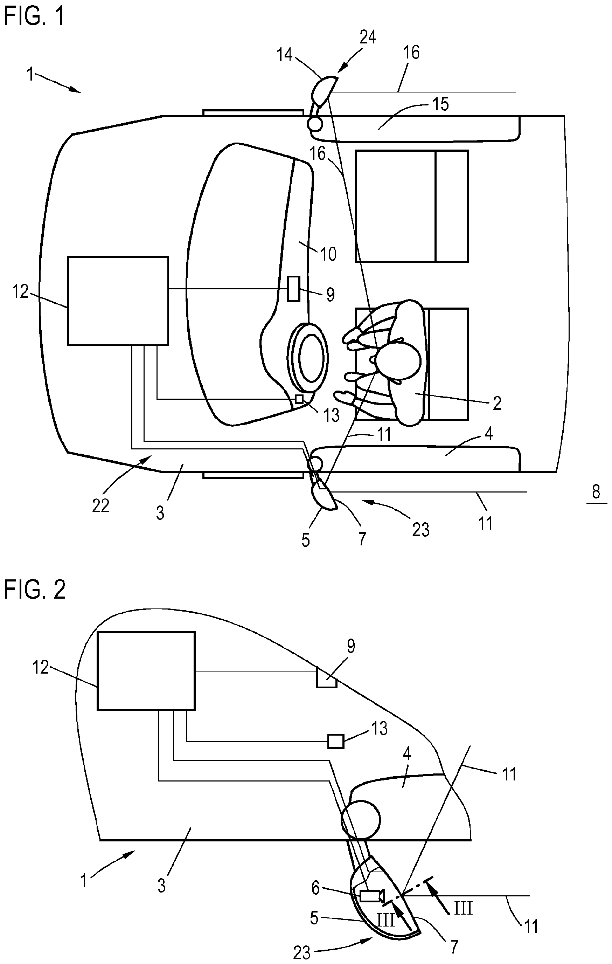

Fig. 1 zeigt schematisch eine Aufsicht auf ein Kraftfahrzeug 1, umfassend eine erfindungsgemäße Rückspiegelanordnung 22, sowie einen Fahrer 2. An der Karosserie 3 des Kraftfahrzeugs 1 ist im vorderen Bereich der fahrerseitigen Fahrzeugtür 4 eine Bildaufnahmeeinrichtung 23 angeordnet. Im Vergleich zu einem klassischen Rückspiegelsystem nimmt die Bildaufnahmeeinrichtung 23 die Position des fahrerseitigen Außenspiegels ein. In Fig. 2 ist eine Detailansicht eines Ausschnitts aus dem Kraftfahrzeug 1 aus Fig. 1 mit aufgebrochener Bildaufnahmeeinrichtung 23 dargestellt. Die Bildaufnahmeeinrichtung umfasst ein Gehäuse 5 und eine darin aufgenommene Kamera 6.

Das Gehäuse 5 weist eine Scheibe 7 auf, deren Transparenz und Spiegelverhalten änderbar ist. Die Scheibe 7 kann einen spiegelnden Zustand einnehmen, in dem von außen einfallendes Licht an der Scheibe 7 idealerweise komplett reflektiert beziehungsweise gespiegelt wird. Mithin ist die Scheibe 7 in diesem Zustand für Licht möglichst undurchlässig, das heißt nicht transparent. Ferner kann die Scheibe 7 einen transparenten Zustand einnehmen, in dem einfallendes Licht möglichst ungestört die Scheibe 7 durchläuft. In diesem Fall weist die Scheibe 7 die größtmögliche Transparenz auf, wobei kein oder nahezu kein Licht gespiegelt wird. Es ist vorgesehen, dass die Scheibe 7 vom spiegelnden in den transparenten Zustand geschaltet werden kann und umgekehrt. Dadurch ist die Rückspiegelanordnung 22 in einem Kameramodus und einem Spiegelmodus betreibbar.

Arbeitet die Rückspiegelanordnung 22 im Kameramodus, dann befindet sich die Scheibe 7 im transparenten Zustand. Die durch die Rückspiegelanordnung 22 sinnvollerweise zu erfassende Umgebung 8 ist aufgrund der Transparenz der Scheibe 7 für die Kamera 6 erfassbar. Die Kamera 6 erfasst Aufnahmen der rückwärtigen Umgebung 8, die an eine als Display ausgebildete Anzeigeeinrichtung 9 weitergeleitet und dort dem Fahrer 2 angezeigt werden. Die Anzeigeeinrichtung 9 kann an einem Armaturenbrett 10 des Kraftfahrzeugs 1 derart angeordnet sein, dass sie während der Fahrt für den Fahrer 2 einsehbar ist.

Arbeitet die Rückspiegelanordnung 22 im Spiegelmodus, so ist die Scheibe 7 im spiegelnden Zustand. In diesem Fall erreicht das Licht aus der Umgebung 8 die Kamera 6 nicht, sondern wird an der Scheibe 7 in Richtung des Fahrers 2 gespiegelt. Die Scheibe 7 ist zu diesem Zweck derart im Gehäuse 5 angeordnet, dass ein Spiegelbild der Umgebung 8 zum Fahrer 2 gelangt. Die Scheibe 7 nimmt mithin in Bezug auf ein klassisches Rückspiegelsystem die Rolle des fahrerseitigen Außenspiegels ein. Ein Sehstrahl 11 deutet den Verlauf eines Lichtstrahls vom Fahrer 2 zur Umgebung 8 an, wenn sich die Rückspiegelanordnung 22 im Spiegelmodus befindet. Um das in der Scheibe 7 für den Fahrer 2 sichtbare Spiegelbild der Umgebung 8 einstellen zu können, ist die Ausrichtung der Scheibe 7 relativ zum Gehäuse 5 vom Fahrer 2 verstellbar. Zu diesem Zweck ist die Scheibe 7 an einen vom Fahrer 2 ansteuerbaren elektromechanischen Aktor (nicht dargestellt) gekoppelt.

Zudem weist die Rückspiegelanordnung 22 eine Steuereinrichtung 12 auf, deren Grundfunktion darin besteht, den Betriebsmodus der Scheibe 7 beziehungsweise der Rückspiegelanordnung 22 zu ändern. Die Steuereinrichtung 12 ist unter anderem mit der Kamera 6, der Anzeigeeinrichtung 9 und der Scheibe 7 verbunden. Außerdem ist die Steuereinrichtung 12 dazu eingerichtet, einen Ausfall der Kamera 6, der Anzeigeeinrichtung 9 oder eines weiteren, für die Funktionalität der Rückspiegelanordnung 22 wichtigen Bauteils zu erfassen und bei einem derartigen Ausfall die Rückspiegelanordnung 22 in den Spiegelmodus zu ändern oder, falls sich diese bereits im Spiegelmodus befindet, in diesem zu lassen. Dadurch wird verhindert, dass beim Ausfall einer der genannten Komponenten der Fahrer 2 die Umgebung 8 nicht mehr in seinem Blickfeld hat, sondern diese durch das sofortige Umschalten der Rückspiegelanordnung 22 in den Spiegelmodus weiterhin sehen kann.

Die Steuereinrichtung 12 ist zudem mit einer Taste 13 verbunden, wobei vorgesehen ist, dass die Steuereinrichtung 12 eine Bedieneingabe des Fahrers 2, insbesondere ein Drücken auf die Taste 13, detektiert. Die Steuereinrichtung 12 ist mit der Scheibe 7 verbunden und dazu eingerichtet, bei der Detektion der Bedieneingabe an der Taste 13 die Scheibe 7 anzusteuern und vom spiegelnden in den transparenten Zustand zu bringen und umgekehrt. Dadurch wird es dem Fahrer 2 ermöglicht, dass er selbständig per Fingerdruck auf die Taste 13 zwischen den Betriebsmodi der Rückspiegelanordnung 22 hin- und herschalten kann. Alternativ ist denkbar, dass die Bedieneingabe über ein Touchscreen oder einen Sensor erfolgt. Der Sensor kann beispielsweise dazu eingerichtet sein, einen entsprechenden Sprachbefehl oder eine Bedienbewegung des Fahrers 2, insbesondere ein Wischen über den Sensor mit der Hand, zu erfassen und ein entsprechendes Signal an die Steuereinrichtung 12 zu übermitteln.

Am Kraftfahrzeug 1 ist außenseitig an der Beifahrertür 15 analog zu einem beifahrerseitigem Rückspiegel eines klassischen Rückspiegelsystems eine weitere Bildaufnahmeeinrichtung 24 angeordnet. Der Aufbau der weiteren Bildaufnahmeeinrichtung 24 entspricht dem der Bildaufnahmeeinrichtung 23, wobei die Komponenten der weiteren Bildaufnahmeeinrichtung 24 ebenfalls mit der Steuereinrichtung 12 in Kontakt stehen. Ein Sehstrahl 16 bezüglich der weiteren Bildaufnahmeeinrichtung 24 vom Fahrer 2 zur Umgebung 8 ist in Fig. 1 dargestellt. Es ist denkbar, dass das Kraftfahrzeug 1 weitere zusätzliche Bildaufnahmeeinrichtungen, die beispielsweise dem Innenspiegel des Kraftfahrzeugs entsprechen, umfasst.

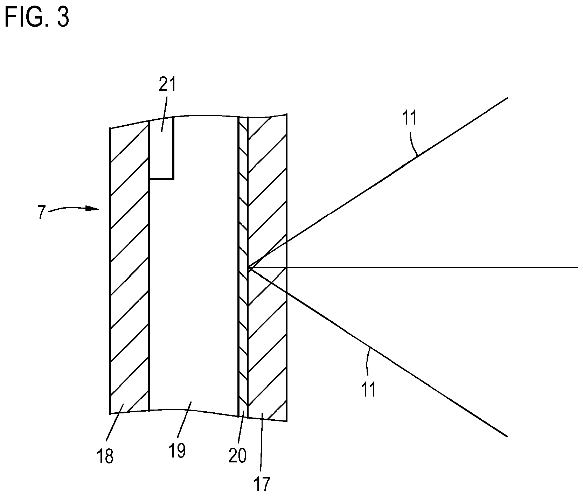

In Fig. 3 ist eine Schnittdarstellung entlang der Linie III - III aus Fig. 2 durch die Scheibe 7 dargestellt. Die Scheibe 7 umfasst eine Trägerscheibe 17, eine weitere Scheibe 18 sowie eine sich dazwischen befindliche Atmosphäre 19. Die Trägerscheibe 17 ist auf der mit der Atmosphäre 19 in Kontakt stehenden Oberfläche mit einem Film 20 beschichtet, dessen Breite sich im Nanometerbereich befindet. Der Film 20 besteht aus einer Magnesium-Titan-Legierung und kann von einem transparenten in einen spiegelnden Zustand wechseln. Im spiegelnden Zustand wird ein einfallender Lichtstrahl an der Scheibe 7 durch den spiegelnden Film 20 reflektiert. Welchen Zustand der Film 20 einnimmt, hängt von einem Wasserstoff- und/oder Sauerstoffgehalt der Atmosphäre 19 ab. Zu diesem Zweck ist zwischen der Trägerscheibe 17 und der weiteren Scheibe 18 ein Reservoir 21 zur Emission und/oder Absorption von Wasserstoff und/oder Sauerstoff angeordnet. Durch Anlegen einer elektrischen Spannung an das Reservoir 21 durch die Steuereinrichtung 12 erfolgt eine Emission beziehungsweise Absorption dieser Elemente. Alternativ kann der Wasserstoff- beziehungsweise Sauerstoffgehalt der Atmosphäre 19 durch die Aufspaltung von Wasser erfolgen, das ebenfalls im Reservoir 21 vorliegen kann. Die Dauer dieses Vorgangs definiert, wie lange das Umschalten der Rückspiegelanordnung 22 vom Spiegelmodus in den Kameramodus und umgekehrt dauert. Natürlich ist es zweckmäßig, wenn dieser Vorgang möglichst schnell erfolgt.

Um dem Fahrer 2 einen möglichst großen Ausschnitt der für die Rückspiegelanordnung 22 relevanten Umgebung 8 einsehbar zu machen, weist die Scheibe 7 bevorzugt eine gegebenenfalls auch nur abschnittsweise gewölbte Oberfläche auf. Dadurch kann der Fahrer nicht nur den Bereich hinter dem Fahrzeug einsehen, sondern bekommt zusätzlich einen Einblick in den toten Winkel des Kraftfahrzeugs 1.

## Patentansprüche

1. Rückspiegelanordnung für ein Kraftfahrzeug (1), umfassend wenigstens eine Bildaufnahmeeinrichtung (23), umfassend ein Gehäuse (5) und eine im Gehäuse (5) aufgenommene Kamera (6), wobei das Gehäuse (5) wenigstens eine Scheibe (7) aufweist, und eine Anzeigeeinrichtung (9) zur Anzeige eines Kamerabilds,
**dadurch gekennzeichnet,**
**dass** die Rückspiegelanordnung (22) in einem Kameramodus, in dem die in ihrer Transparenz und ihrem Spiegelverhalten änderbare Scheibe (7) transparent, und einem Spiegelmodus, in dem die Scheibe (7) verspiegelt ist, betreibbar ist, wobei im Kameramodus die Kamera (6) die Umgebung (8) des Kraftfahrzeugs (1) durch die transparente Scheibe (7) hindurch erfasst, die über die Anzeigeeinrichtung (9) einem Fahrer (2) angezeigt wird, wobei im Spiegelmodus ein Spiegelbild der Umgebung (8) in der spiegelnden Scheibe (7) für den Fahrer (2) sichtbar ist.

2. Rückspiegelanordnung nach Anspruch 1,
**dadurch gekennzeichnet,**
**dass** die Anzeigeeinrichtung (9) ein Display umfasst.

3. Rückspiegelanordnung nach Anspruch 1 oder 2,
**dadurch gekennzeichnet,**
**dass** die Anzeigeeinrichtung (9) einen Projektor zur Projektion eines Bildes auf eine zugeordnete Projektionsfläche umfasst.

4. Rückspiegelanordnung nach einem der vorangehenden Ansprüche,
**dadurch gekennzeichnet,**
**dass** bei einem Vorliegen einer Fehlfunktion der Kamera (6) und/oder der Anzeigeeinrichtung (9) die Rückspiegelanordnung (22) in den Spiegelmodus geändert wird oder in diesem bleibt.

5. Rückspiegelanordnung nach einem der vorangehenden Ansprüche,
**dadurch gekennzeichnet,**
**dass** die Scheibe (7) mit einer Steuereinrichtung (12) verbunden ist, wobei die Steuereinrichtung (12) zum Wechseln der Scheibe (7) vom transparenten Zustand in den spiegelnden Zustand und umgekehrt ausgebildet ist.

6. Rückspiegelanordnung nach Anspruch 4 und 5,
**dadurch gekennzeichnet,**
**dass** die Steuereinrichtung (12) dazu eingerichtet ist, die Fehlfunktion der Kamera (6) und/oder der Anzeigeeinrichtung (9) zu erfassen und bei Vorliegen der Fehlfunktion die Rückspiegelanordnung (22) in den Spiegelmodus zu ändern oder in diesem zu lassen.

7. Rückspiegelanordnung nach Anspruch 5 oder 6,
**dadurch gekennzeichnet,**
**dass** die Steuereinrichtung (12) dazu eingerichtet ist, bei Vorliegen einer nutzerseitigen Bedieneingabe die Rückspiegelanordnung (22) vom Kameramodus in den Spiegelmodus zu ändern und/oder die Rückspiegelanordnung (22) vom Spiegelmodus in den Kameramodus zu ändern.

8. Rückspiegelanordnung nach Anspruch 7,
**dadurch gekennzeichnet,**
**dass** zur Bedieneingabe eine Taste (13) und/oder ein Touchscreen und/oder ein Sensor zur Erfassung eines Sprachbefehls oder einer Bedienbewegung des Fahrers (2) vorgesehen ist.

9. Rückspiegelanordnung nach einem der vorangehenden Ansprüche,
**dadurch gekennzeichnet,**
**dass** die Scheibe (7) wenigstens eine Trägerscheibe (17) umfasst, wobei die Trägerscheibe (17) einen Film (20) aufweist, der in Abhängigkeit des Modus der Rückspiegelanordnung (22) in den transparenten und den spiegelnden Zustand gebracht werden kann.

10. Rückspiegelanordnung nach Anspruch 9,
**dadurch gekennzeichnet,**
**dass** der Film (20) aus einer Magnesium-Titan-Legierung besteht, die in Abhängigkeit einer Wasserstoff- und/oder Sauerstoffkonzentration einer mit dem Film (20) in Kontakt stehenden Atmosphäre (19) den transparenten oder spiegelnden Zustand einnimmt.

11. Rückspiegelanordnung nach einem der vorangehenden Ansprüche,
**dadurch gekennzeichnet,**
**dass** die Scheibe (7) eine zumindest abschnittsweise gewölbte Oberfläche aufweist.

12. Kraftfahrzeug umfassend wenigstens eine Rückspiegelanordnung nach einem der vorangehenden Ansprüche.

13. Kraftfahrzeug nach Anspruch 12,
**dadurch gekennzeichnet,**
**dass** die Anzeigeeinrichtung (9) einen Monitor und/oder ein Display umfasst, wobei das Display an der dem Fahrzeuginnenraum zugewandten Seite einer fahrerseitigen Fahrzeugtür (4) oder an einem Armaturenbrett (10) angeordnet ist.

14. Kraftfahrzeug nach Anspruch 12 oder 13,
**dadurch gekennzeichnet,**
**dass** die Anzeigeeinrichtung (9) einen Projektor zur Projektion eines Bildes auf eine zugeordnete Projektionsfläche umfasst.

## Claims

1. Rear view mirror arrangement for a motor vehicle (1), comprising at least one image capture apparatus (23), comprising a housing (5) and a camera (6) mounted in the housing (5), wherein the housing (5) has at least one pane (7), and a display device (9) for displaying a camera image,
**characterised in that**,
the rear view mirror arrangement (22) can be operated in a camera mode, in which the pane (7), whose transparency and mirroring behaviour can be changed, is transparent, and a mirror mode, in which the pane (7) is reflective, wherein in camera mode the camera (6) records the area surrounding (8) the motor vehicle (1) through the transparent pane (7), which is displayed to a driver (2) by means of the display unit (9), wherein in mirror mode a mirror image of the surrounding area (8) is visible to the driver (2) in the reflecting pane (7).

2. Rear view mirror arrangement according to claim 1,
**characterised in that**,
the display unit (9) comprises a display.

3. Rear view mirror arrangement according to claim 1 or 2,
**characterised in that**,
the display unit (9) comprises a projector for projecting an image onto an assigned projection surface.

4. Rear view mirror arrangement according to any of the preceding claims,
**characterised in that**,
in case of an error function of the camera (6) and/or the display unit (9) the rear view mirror arrangement (22) is changed into mirror mode or remains in the latter.

5. Rear view mirror arrangement according to any of the preceding claims,
**characterised in that**,
the pane (7) is connected to a control unit (12), wherein the control unit (12) is designed for changing the pane (7) from the transparent state into the mirror image and vice versa.

6. Rear view mirror arrangement according to claim 4 and 5,
**characterised in that**,
the control unit (12) is configured to detect the error function of the camera (6) and/or the display unit (9) and in case of an error function to change the rear view mirror arrangement (22) into mirror mode or leave it in the latter.

7. Rear view mirror arrangement according to claim 5 or 6,
**characterised in that**,
the control unit (12) is configured, in case of an operator entry to change the rear view mirror arrangement (22) from camera mode to mirror mode and/or to change the rear view mirror arrangement (22) from mirror mode to camera mode.

8. Rear view mirror arrangement according to claim 7,
**characterised in that**,
for the operating entry a key (13) and/or a touchscreen and/or a sensor is provided for detecting a speech command or an operating movement of the driver (2).

9. Rear view mirror arrangement according to any of the preceding claims,
**characterised in that**
the pane (7) comprises at least one support pane (17), wherein the support pane (17) has a film (20), which as a function of the mode of the rear view mirror arrangement (22) can be moved into the transparent and the mirror state.

10. Rear view mirror arrangement according to claim 9,
**characterised in that**,
the film (20) is made from a magnesium-titanium alloy, which as a function of a hydrogen and/or oxygen concentration of an atmosphere (19) in contact with the film (20) adopts the transparent or mirror state.

11. Rear view mirror arrangement according to any of the preceding claims,
**characterised in that**,
the pane (7) has an at least partly curved surface.

12. Motor vehicle comprising at least one rear view mirror arrangement according to any of the preceding claims.

13. Motor vehicle according to claim 12,
**characterised in that**
the display unit (9) comprises a monitor and/or a display, wherein the display is arranged on the side of a driver's vehicle door (4) facing the interior of the vehicle or on a dashboard (10).

14. Motor vehicle according to claim 12 or 13,
**characterised in that**
the display unit (9) comprises a projector for projecting an image onto an assigned projection surface.

## Revendications

1. Ensemble de rétroviseurs pour un véhicule automobile (1), comprenant au moins un dispositif d'enregistrement d'images (23), comprenant un boîtier (5) et une caméra (6) logée dans le boîtier (5), dans lequel le boîtier (5) présente au moins une vitre (7), et un dispositif d'affichage (9) servant à afficher une image de caméra,
**caractérisé en ce**
**que** l'ensemble de rétroviseurs (22) peut fonctionner dans un mode caméra dans lequel la vitre (7) dont la transparence et le comportement de réfléchissement peuvent être modifiés est transparente, et un mode miroir dans lequel la vitre (7) est réfléchissante, dans lequel en mode caméra, la caméra (6) détecte les environs (8) du véhicule (1) à travers la vitre transparente (7) qui sont affichés à l'intention d'un conducteur (2) par l'intermédiaire du dispositif d'affichage (9), dans lequel en mode miroir, une image miroir des environs (8) est visible par le conducteur (2) sur la vitre réfléchissante (7).

2. Ensemble de rétroviseurs selon la revendication 1,
**caractérisé en ce**
**que** le dispositif d'affichage (9) comprend un écran.

3. Ensemble de rétroviseurs selon la revendication 1 ou 2,
**caractérisé en ce**
**que** le dispositif d'affichage (9) comprend un projecteur pour la projection d'une image sur une surface de projection associée.

4. Ensemble de rétroviseurs selon l'une quelconque des revendications précédentes,
**caractérisé en ce**
**qu'**en présence d'un dysfonctionnement de la caméra (6) et/ou du dispositif d'affichage (9), l'ensemble de rétroviseurs (22) passe en mode miroir ou reste dans ce mode.

5. Ensemble de rétroviseurs selon l'une quelconque des revendications précédentes,
**caractérisé en ce**
**que** la vitre (7) est reliée à un dispositif de commande (12) dans lequel le dispositif de commande (12) est conçu pour faire passer la vitre (7) de l'état transparent à l'état réfléchissant et inversement.

6. Ensemble de rétroviseurs selon les revendications 4 et 5,
**caractérisé en ce**
**que** le dispositif de commande (12) est configuré pour capter le dysfonctionnent de la caméra (6) et/ou le dispositif d'affichage (9) et en présence du dysfonctionnement, pour faire passer l'ensemble de rétroviseurs (22) en mode miroir ou le laisser dans ce mode.

7. Ensemble de rétroviseurs selon la revendication 5 ou 6,
**caractérisé en ce**
**que** le dispositif de commande (12) est configuré pour faire passer, en présence d'une entrée opérationnelle générée par l'utilisateur, l'ensemble de rétroviseurs (22) du mode caméra au mode miroir et/ou pour faire passer l'ensemble de rétroviseurs (22) du mode miroir au mode caméra.

8. Ensemble de rétroviseurs selon la revendication 7,
**caractérisé en ce**
**que** pour l'entrée opérationnelle, une touche (13) et/ou un écran tactile et/ou un capteur est prévu(e) pour la saisie d'une commande vocale ou d'un mouvement opérationnel du conducteur (2).

9. Ensemble de rétroviseurs selon l'une quelconque des revendications précédentes,
**caractérisé en ce que**
la vitre (7) comprend au moins une vitre porteuse (17), dans lequel la vitre porteuse (17) présente un film (20) qui peut être amené à passer en fonction du mode de l'ensemble de rétroviseurs (22) à l'état transparent et à l'état réfléchissant.

10. Ensemble de rétroviseurs selon la revendication 9,
**caractérisé en ce**
**que** le film (20) consiste en un alliage de magnésium-titane qui adopte, en fonction d'une concentration en hydrogène et/ou en oxygène d'une atmosphère (19) qui est en contact avec le film (20), l'état transparent ou réfléchissant.

11. Ensemble de rétroviseurs selon l'une quelconque des revendications précédentes,
**caractérisé en ce**
**que** la vitre (7) présente une surface au moins partiellement bombée.

12. Véhicule automobile comprenant au moins un ensemble de rétroviseurs selon l'une quelconque des revendications précédentes.

13. Véhicule automobile selon la revendication 12,
**caractérisé en ce**
**que** le dispositif d'affichage (9) comprend un moniteur et/ou un écran, dans lequel l'écran est disposé sur le côté tourné vers l'habitacle du véhicule d'une porte de véhicule (4) du côté conducteur ou au niveau d'un tableau de bord (10).

14. Véhicule automobile selon la revendication 12 ou 13,
**caractérisé en ce**
**que** le dispositif d'affichage (9) comprend un projecteur pour la projection d'une image sur une surface de projection associée.
